# EUROPÄISCHE PATENTSCHRIFT

(11) **EP 1 377 403 B1**
(45) Veröffentlichungstag und Bekanntmachung des Hinweises auf die Patenterteilung: **10.08.2011**
(21) Anmeldenummer: 02727244.2
(22) Anmeldetag: 19.03.2002
(51) Int. Cl.: B23D 51/10

(54) **LÖSBARER WERKZEUGBEFESTIGUNGSMECHANISMUS UND WERKZEUG ZUR VERWENDUNG DAMIT**
DETACHABLE TOOL FIXING MECHANISM AND TOOL FOR USE THEREWITH
MECANISME DE FIXATION D'OUTIL AMOVIBLE ET OUTIL CORRESPONDANT

(30) Priorität: 04.04.2001 GB 0108495
(43) Veröffentlichungstag der Anmeldung: 07.01.2004
(73) Patentinhaber: ROBERT BOSCH GMBH, 70442 Stuttgart (DE)
(72) Erfinder: WUENSCH, Steffen, 71088 Holzgerlingen (DE); CARR, Mather, Johnh, Cambridge CB4 3LB (GB); MILLER, Anne, Tregoning, Cambridge CB2 2EZ (GB); POLLOCK, Neil, Royston, Hertz SG8 7DW (GB); KAISER, Hans, CH-3297 Leuzigen (CH); SAEGESSER, Daniel, CH-4900 Langenthal (CH); GROLIMUND, Daniel, CH-4528 Zuchwil (CH)
(86) Internationale Anmeldenummer: PCT/DE2002/000980
(87) Internationale Veröffentlichungsnummer: WO 2002/081135

(56) Entgegenhaltungen:
- EP-A- 0 940 210
- EP-A- 1 053 813
- DE-A- 19 532 494
- DE-U- 8 805 767
- US-A- 2 137 800
- US-A- 3 259 158
- US-A- 5 810 367
- US-A- 5 987 758
- US-B1- 6 209 208
- PATENT ABSTRACTS OF JAPAN vol. 015, no. 378 (M-1161), 24. September 1991 (1991-09-24) -& JP 03 151201 A (YUUM KOGYO:KK), 27. Juni 1991 (1991-06-27)
- PATENT ABSTRACTS OF JAPAN vol. 1996, no. 10, 31. Oktober 1996 (1996-10-31) -& JP 08 155904 A (DAIKICHIDOU:KK), 18. Juni 1996 (1996-06-18)

## Beschreibung

Die vorliegende Erfindung betrifft lösbare Werkzeugbefestigungssysteme und Werkzeuge zur Verwendung damit, (siehe z.B. DE-A-19532494).

Säbelsägen sind hin- und hergehende Maschinensägen, die oftmals bei Abbrucharbeiten und groben Schneidanwendungen verwendet werden, und es ist im Stand der Technik bekannt, bei solchen Sägen ein Schnellwechsel-Blattklemmsystem zu verwenden, um, wenn erforderlich, ein schnelles und leichtes Auswechseln eines Blatts zu ermöglichen. Bei bekannten Blattklemmanordnungen kommt es in der Regel zu einer Wechselwirkung von Kurvenflächen, Kugellagern und geneigten Ebenen zum Festklemmen eines standardmäßigen Sägeblattschafts. In der Regel wird das Blatt durch Eingriff eines Zapfen- oder Kugellagers in einem im Blattschaft ausgebildeten Durchgangsloch festgehalten, um Längsbelastungen entgegenzuwirken, wenn die flache Oberfläche des Blattschafts festgeklemmt wird. Obgleich diese bekannten Systeme dahingehend wirken, einen Freiheitsgrad eines Sägeblatts einzuschränken, beruhen sie in der Regel auf der mechanischen Anbringung des Blatts in einem Schlitz im Klemmechanismus, um die verbleibenden Freiheitsgrade einzuschränken, und dies ist stark von erreichbaren Herstellungstoleranzen abhängig. In der Praxis kommt es bei diesen bekannten Systemen dann zu einem gewissen Grad an unerwünschtem Spiel des Blatts.

Gemäß einem Aspekt der vorliegenden Erfindung wird ein Werkzeugklemmechanismus mit den Merkmalen des Anspruchs 1 bereitgestellt.

Weiterhin stellt die vorliegende Erfindung ein Werkzeug zur Verwendung mit einem erfindungsgemäßen Klemmechanismus bereit, welches die Merkmale des Anspruchs 18 aufweist.

Ein System aus einem Werkzeugklemmechanismus und einem Werkzeug zur Verwendung damit weist den Vorteil auf, daß das System aufgrund der Tatsache, daß die konvergierenden Seiten der Klemmöffnung in der Querebene zueinander geneigt sind, so daß eine doppelte Verjüngung in der Öffnung entsteht, allen sechs Freiheitsgraden eines eingeführten Blatts innerhalb der Herstellungstoleranzen entgegenwirkt, die durch herkömmliche Massenfertigungsverfahren erreichbar sind, die bei Systemen nach dem Stand der Technik verwendet werden, die, wie oben erörtert, das Werkzeug ohne unzulässiges mechanisches Spiel nicht vollständig einschränken können. Wenn die Verjüngung der Klemmöffnung symmetrisch verläuft, gestattet das System darüber hinaus eine bidirektionale Befestigung, so daß ein Werkzeug, wie zum Beispiel ein Säbelsägeblatt, mit entweder nach oben oder nach unten weisenden Zähnen befestigt werden kann, wodurch die Vielseitigkeit des Werkzeugs vergrößert wird, und die Anordnung des Sperrstifts ermöglicht das Laden eines Werkzeugs in die Klemmvorrichtung, ohne daß es über festgelegte Positionierstifte manövriert werden muß, wodurch ihre Verwendung vereinfacht wird. Der Reibschluß des Sperrstifts bedeutet auch, daß die einzig erdenkbare Weise, auf die ein Werkzeug während des Gebrauchs versehentlich von der Säge freigegeben werden könnte, ein Sprungvollausfall des Klemmechanismus oder des Werkzeugschafts ist.

Des weiteren ermöglicht die Ausbildung des Werkzeugschafts im Vergleich zu den aus dem Stand der Technik bekannten eine verbesserte Festigkeit, und die erhöhte Torsions- und Biegesteifigkeit, die dadurch im Schaft möglich ist, gestattet engere Schneidradien. Insbesondere wird durch die sich verjüngende Gestaltung der Klemmöffnung und des Werkzeugschafts der Werkzeugquerschnitt dort maximiert, wo er auf den Werkzeugkörper trifft, was im Gebrauch dem Bereich mit maximaler Biegespannung entspricht, wodurch die Gesamtfestigkeit des Blatts im Vergleich zu Ausführungen nach dem Stand der Technik, verbessert wird. Bei Ausführungen nach dem Stand der Technik ist in der Regel am Übergang zwischen dem Werkzeugschaft und dem Werkzeugkörper eine stufenförmige Querschnittsänderung erforderlich gewesen, wodurch die Wahrscheinlichkeit eines durch Spannungskonzentrationen an der Querschnittsänderung hervorgerufenen Ermüdungsbruchs erhöht wird.

Vorzugsweise ist in dem Werkzeugschaft ein Loch ausgebildet, durch das sich der Sperrstift erstreckt, um ein Herausziehen des Werkzeugschafts aus der Klemmöffnung zu verhindern, wobei der Vorderrand des Lochs die Sperrstifteingriffsfläche des Werkzeugschafts bildet. Dies weist den Vorteil auf, daß die Längszwangskraft auf ausgeglichene Weise am Werkzeugschaft angelegt werden kann, wodurch der Schaft in ordnungsgemäßen Eingriff mit der Klemmöffnung gedreht werden kann. Als Alternative dazu könnte der Werkzeugschaft in mindestens einer Seite davon mit einer Kerbe oder einer Aussparung ausgebildet sein, wobei die Kerbe eine Seitenfläche aufweist, an der der Stift angreifen kann, um ein solches Herausziehen des Schafts aus der Klemmöffnung zu verhindern.

Bei der bevorzugten Ausführungsform weist der Sperrstift einen sich verjüngenden Abschnitt auf, der mit dem Vorderrand des Lochs oder der Seitenkerbe im eingeführten Werkzeugschaft so zusammenwirkt, daß bei weiterem Hineindrücken des Sperrstifts in die Klemmöffnung die sich durch die Verjüngung am Sperrstift ergebende Eingriffswirkung den Schaft tiefer in die Klemmöffnung zieht. Dies bringt den Vorteil mit sich, daß das Werkzeug sehr fest in der Öffnung festgeklemmt werden kann, ohne daß von dem Bediener durch das Werkzeug selbst eine übermäßige Kraft ausgeübt werden muß, die bei zerbrechlichen Werkzeugen, wie zum Beispiel Sägeblättern, zu einem Bruch führen könnte. Der Kegelwinkel des sich verjüngenden Abschnitts ist vorzugsweise kleiner als tan⁻¹(2µ), wobei µ gleich der Haftreibungszahl für die bestimmten Kontaktflächen ist, wodurch gewährleistet wird, daß der Sperrstift durch Reibschluß entlang der Achse des Werkzeugteils ausgeübten Belastungen entgegenwirkt.

Bei der bevorzugten Ausführungsform wird durch ein Vorspannmittel auf den Sperrstift eingewirkt, das ihn mit ausreichender Kraft in die Klemmöffnung schiebt, um zu gewährleisten, daß die Eingriffswirkung zwischen dem sich verjüngenden Teil des Sperrstifts und dem Blattschaft eine ordnungsgemäße Befestigung des Werkzeugs bewirkt. Nach Eingriff des Sperrstifts wird er durch Haftreibung wirksam festgehalten, so daß das Vorspannmittel nicht durch auf das Blatt ausgeübte Belastungen überwunden werden kann. Dann wird ein Freigabemechanismus vorgesehen, das von dem Bediener aktiviert wird, um den Sperrstift gegen die Belastung durch das Vorspannmittel aus der Öffnung zurückzuziehen, um ein im Mechanismus gesichertes Werkzeug freizugeben. Dies kann dann besonders effektiv erreicht werden, wenn das von der Öffnung entfernte Ende des Sperrstifts mit einem Freigabehebel verbunden ist, der schwenkbar am Gehäuse angebracht ist, so daß der Schwenkvorgang des Freigabehebels eine Bewegung des Sperrstifts zwischen seiner ersten und seiner zweiten Stellung bewirkt. Das Vorspannmittel kann dann als Torsionsfeder ausgebildet sein, die mit dem Freigabehebel in Eingriff steht und ihn zu einer Stellung drückt, in der er den Sperrstift in die Klemmöffnung drückt. Dies bringt den Vorteil mit sich, daß dadurch ein besonders einfaches, aber effektives Halte- und Freigabesystem für den Sperrstift bereitgestellt wird.

Weiterhin enthält der Mechanismus vorteilhafterweise ein Blattauswurfsystem in Form eines Schlittens, der in der Klemmöffnung zur Ausführung einer begrenzten Längsverschiebung darin angebracht und zum Beispiel durch eine Druckfeder zur Mündung der Öffnung hin vorgespannt ist, so daß die Spitze bei Einführen eines Schafts in die Öffnung den Schlitten in Eingriff nimmt und ihn gegen die Belastung durch die Druckfeder zum hinteren Teil der Öffnung schiebt. Bei Freigabe des Schafts aus der Öffnung durch Betätigung des Freigabehebels schiebt die Druckfeder dann den Schlitten nach vorne, wodurch der Schaft aus der Mündung der Öffnung herausgeschoben wird. Die Vorwärtsstellung des Schlittens ist vorzugsweise dann so angeordnet, daß sie über dem Schnittpunkt zwischen der Sperrstiftöffnung und der Klemmöffnung liegt, wobei der Sperrstift an seinem dem Schlitten zugewandten Vorderrand mit Ausschnitten versehen ist, die mit einer V-Kerbe im Schlitten in Eingriff gelangen, um einen ordnungsgemäßen Eingriff zwischen den beiden Teilen zu gewährleisten. Auf diese Weise verriegelt der Mechanismus bei Herausziehen des Werkzeugs aus der Öffnung den Sperrstift automatisch in seiner ersten Stellung, wodurch das Einführen eines neuen Werkzeugs ermöglicht wird, ohne daß der Bediener den Freigabehebel benutzen muß, um den Sperrstift aus der Klemmöffnung freizugeben. Dadurch wird das Laden und Entladen eines Werkzeugs in den bzw. aus dem Mechanismus mit einer Hand ermöglicht, was besonders vorteilhaft ist, da ein Benutzer ein heißes Werkzeugteil herausnehmen kann, ohne daß die Gefahr besteht, daß sich der Bediener daran verbrennt.

Vorzugsweise ist das Loch in dem Schaft des Werkzeugs in seiner Einführrichtung in die Klemmöffnung länglich, um den unterschiedlichen Dicken des Sperrstifts aufgrund des daran ausgebildeten sich verjüngenden Abschnitts Rechnung zu tragen. Dies bringt den Vorteil mit sich, daß der Sperrstift vorwärtsbewegt werden kann, ohne die Querschnittsfläche des Werkzeugschafts zu reduzieren. Des weiteren kann die Querschnittsfläche des Sperrstifts ohne unzulässige Schwächung des Werkzeugschafts vergrößert werden.

Des weiteren ist es besonders vorteilhaft, wenn an den konvergierenden Seiten des Werkzeugschafts drei Vorsprünge ausgebildet werden, von denen mindestens einer an jeder der beiden Seiten vorgesehen ist. Dies bringt den Vorteil mit sich, daß durch die sich ergebende Berührung zwischen dem Werkzeugschaft und den Seiten der Öffnung gewährleistet wird, daß die ausgeübten Reaktionskräfte statisch bestimmt sind, wodurch eine besonders stabile Befestigung des Schafts ohne Spiel entsteht, die selbst normalen Herstellungstoleranzen Rechnung trägt. Als Alternative könnten die Vorsprünge an den konvergierenden Wänden der Klemmöffnung statt an den Seiten des Schafts vorgesehen werden, um die gleichen statisch bestimmten Reaktionskräfte zu erhalten, obgleich die Herstellung des sich ergebenden Mechanismus teurer sein wird und eine bidirektionale Befestigung eventuell nicht möglich ist.

Zum guten Verständnis der Erfindung werden nun unter Bezugnahme auf die beigefügten Zeichnungen einige beispielhafte Ausführungsformen davon beschrieben; es zeigen:
Figur 1 eine Explosionsdarstellung eines erfindungsgemäßen Werkzeugklemmechanismus;
Figur 2 eine perspektivische Ansicht des Mechanismus von Figur 1. mit eingeführtem Werkzeugschaft;
Figur 3 eine perspektivische Ansicht eines erfindungsgemäßen Werkzeugschafts, wobei eine Werkzeugschaftklemmöffnung des Klemmechanismus in Umrissen gezeigt wird;
Figur 4 eine Schnittansicht durch die Werkzeugschaftklemmöffnung mit einem darin eingeführten Werkzeugschaft;
Figur 5 eine perspektivische Ansicht des in die Werkzeugschaftklemmöffnung eingeführten Werkzeugschafts ähnlich Figur 3, die die Art und Weise des Eingriffs des Sperrstifts in ein Loch im Werkzeugschaft zeigt; und
Figur 6 eine perspektivische Ansicht des Sperrstifts, der einen Teil des Klemmechanismus von Figur 1 bildet.

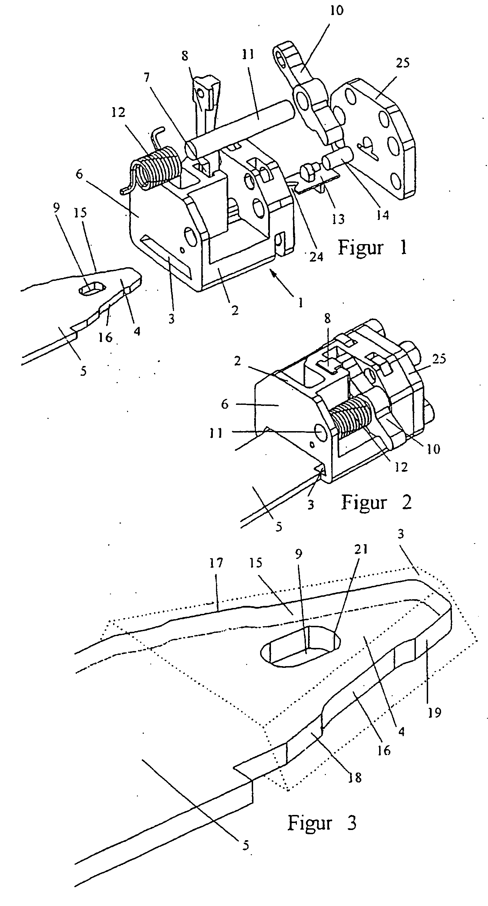

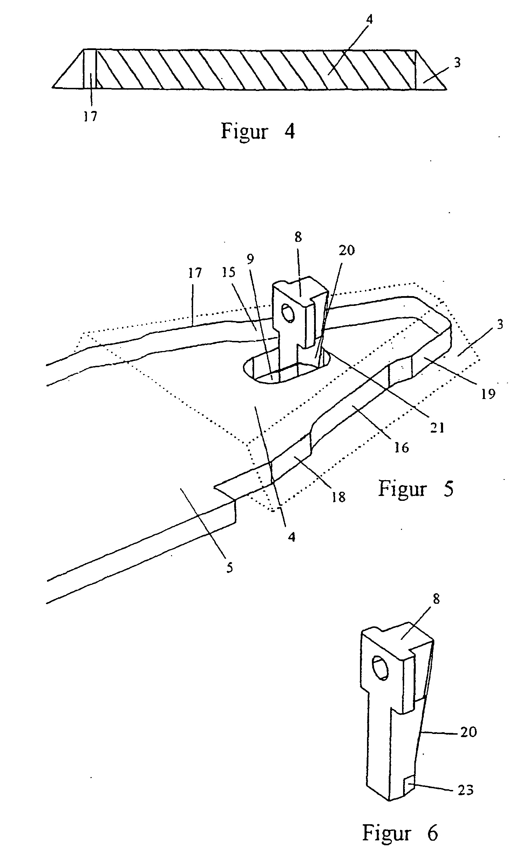

Zunächst auf Figur 1 Bezug nehmend, wird eine Explosionsdarstellung einer bevorzugten Ausführungsform einer erfindungsgemäßen Werkzeugklemmanordnung 1 gezeigt. Es wird eine Ausführungsform eines Sägeblattschafts dargestellt, jedoch versteht sich, daß sich die Erfindung auf viele verschiedene Arten von austauschbaren Werkzeugen anwenden läßt. Die Klemmanordnung 1 besteht aus einem Gehäuse 2, in dem eine Blattöffnung 3 zur Aufnahme des Schafts 4 eines festzuklemmenden Sägeblatts 5, wie zum Beispiel eines Säbelsägeblatts, ausgebildet ist, wobei die Blattöffnung 3 an einer Seite 6 des Gehäuses 2 anfängt und sich in Längsrichtung durch das Gehäuse zu dessen gegenüberliegender Seite erstreckt und sich dabei nach innen verjüngt, so daß sich die Breite der Blattöffnung in ihrer Erstreckung von der einen Seite 6 weg verkleinert, wie in den Figuren 3 und 5 besser zu sehen. Neben der Verjüngung in Längsrichtung sind die konvergierenden Seiten der Öffnung zueinander geneigt, so daß sich die Blattöffnung auch in der senkrecht zur Ebene des eingeführten Blattschafts 4 verlaufenden Richtung verjüngt, was dazu führt, daß die Oberseite der Blattöffnung schmaler ist als die Unterseite der Blattöffnung, wie in Figur 5 deutlich zu sehen.

Im Gehäuse 2 ist eine Öffnung 7 ausgebildet, die die Ebene der Blattöffnung schneidet und sich durch diese hindurch erstreckt und in der ein Sperrstift 8 aufgenommen wird. Der Sperrstift 8 ist entlang der Öffnung 7 zwischen einer Verriegelungsstellung, in der er sich in die Blattöffnung 3 erstreckt, so daß er im Gebrauch in ein im darin eingeführten Schaft 4 eines Sägeblatts 5 ausgebildetes Loch 9 eingreift, um ihn in der Blattöffnung 3 auf die in Figur 5 gezeigte Weise zu verriegeln, und einer Freigabestellung, in der der Stift aus der Blattöffnung 3 zurückgezogen ist, damit ein Blattschaft ungehindert in die Blattöffnung 3 eingeführt und daraus herausgezogen werden kann, beweglich. Wie in den Figuren 5 und 6 besser zu sehen, weist der Sperrstift 8 einen sich verjüngenden Abschnitt 20 auf, der mit einem Ende 21 des Lochs 9 im Blattschaft in Eingriff gelangt, so daß bei weiterem Hineinschieben des Stifts 8 in das Loch 9 die sich ergebende Eingriffswirkung den Schaft 4 des Sägeblatts 5 tiefer in die Blattöffnung 3 zieht, wie im folgenden erläutert. Des weiteren weist der Sperrstift 8 eine an seinem unteren Ende in beide Seiten geschnittene Aussparung 23 auf, von denen eine in Figur 6 zu sehen ist, die mit einer in der Vorderseite eines Auslösers 13 ausgebildeten V-Kerbe 24 zusammenwirken, um den Stift 8 in einer Freigabestellung zu verriegeln, wie später beschrieben wird.

Der Sperrstift 8 ist an seinem oberen Ende mit einem Ende eines an einer Achse 11 schwenkbar angebrachten Freigabehebels 10 verbunden. Die Achse 11 ist wiederum im Gehäuse angebracht, so daß eine Schwenkbewegung des Freigabehebels 10 um die Achse eine Bewegung des Sperrstifts zwischen seiner Verriegelungs- und freigegebenen Stellung bewirkt. Des weiteren ist an der Achse 11 eine Torsionsfeder 12 angebracht, die den Freigabehebel in Eingriff nimmt und ihn in eine erste Drehstellung vorspannt, in der sich der Sperrstift 8 in seiner Verriegelungsstellung befindet. Der Sperrstift 8 ist deshalb in seine verriegelte Stellung vorgespannt, kann aber durch Betätigung des Freigabehebels 10 gegen die Vorspannung der Torsionsfeder 12 daraus zurückgezogen werden.

In dem von der Seite 6 des Gehäuses entfernten Ende der Blattöffnung 3 ist der Auslöser 13 verschiebbar angebracht. Der Auslöser 13 wird von einer Auslöserfeder 14 zum vorderen Ende der Blattöffnung 3 in eine Sperrstellung vorgespannt, in der er über dem Schnittpunkt der Öffnung 7 mit der Blattöffnung 3 liegt, wobei seine in Figur 1 zu sehende V-Kerbe 24 in die in beiden Seiten des Sperrstifts 8 ausgebildeten Aussparungen 23 eingreift, um den Sperrstift 8 in seiner freigegebenen Stellung gegen die Belastung durch die Torsionsfeder 12 zu verriegeln. Bei Einführen des Blattschafts 4 in die Blattöffnung 3 wird der Auslöser 13 dann gegen die Belastung durch die Auslöserfeder 14 von der Mündung der Blattöffnung 3 weg bewegt, so daß der Sperrstift 8 in das Loch 9 im Blattschaft 4 eingreifen kann. Eine Trägerplatte 25 ist an der Rückseite des Gehäuses 2 befestigt, um den Auslöser 13, die Auslöserfeder 14 und die Achse 11 darin festzuhalten.

Die Seiten 15, 16 des Blattschafts 4 verjüngen sich auch in Längsrichtung einwärts, um die Längsverjüngung der Blattöffnung 3 zu ergänzen, und enthalten, wie in den Figuren 3 und 5 deutlich zu sehen, zwischen den konvergierenden Seiten verteilt drei Vorsprünge 17, 18, 19, die um das Blattschaftprofil herum verteilt sind und mit den sich verjüngenden Seiten der Blattöffnung 3 in Eingriff gelangen, um eine Berührung zwischen dem Blattschaft und der Blattöffnung 3 an sechs Stellen zu bewirken. Eine solche Berührung an sechs Stellen gewährleistet, daß die ausgeübten Reaktionen statisch bestimmt sind, wodurch maximale Stabilität im festgeklemmten Blatt gewährleistet wird.

Die Klemmanordnung funktioniert wie folgt:

Befindet sich kein Blatt in der Blattöffnung 3, schiebt die Auslöserfeder 14 den Auslöser 13 nach vorne, um den Sperrstift in seiner freigegebenen Stellung zu verriegeln, wodurch eine ungehinderte Einführung eines Blattschafts in die Klemmöffnung 3 ermöglicht wird. Bei Einführen eines Blattschafts 4 in die Blattöffnung 3 nimmt das Ende des Schafts den Auslöser 13 in Eingriff und schiebt ihn gegen die Kraft der Auslöserfeder 14 zur Trägerplatte 25 zurück, bis der Sperrstift 8 entriegelt wird und unter der Belastung durch die Torsionsfeder 12 in das Loch 9 im Blattschaft 4 eingreift. Bei weiterem Drücken des Sperrstifts 8 durch das Loch 9 im Schaft 4 durch die Torsionsfeder, greift die Verjüngung am Vorderrand des Sperrstifts 8 am Vorderrand des Lochs 9 an, und durch die sich ergebende Eingriffswirkung wird der Schaft 4 weiter in die Blattöffnung 3 hineingeschoben. Während der Blattschaft 4 unter der Eingriffswirkung des Sperrstifts 8 in den Endeingriff vorrückt, kann er sich in der Ebene der Öffnung 3 drehen, so daß die drei Vorsprünge 17, 18, 19 zur Anlage an den Wänden der Öffnung kommen, wodurch eine ordnungsgemäße Ausrichtung des Blattschafts in der Blattöffnung 3 gewährleistet wird. Gleichzeitig wird der Blattschaft 4 durch die durch das Angreifen der Vorsprünge 17, 18, 19 am Schaft 4 an der vertikalen Verjüngung der konvergierenden Seiten der Blattöffnung 3 hervorgerufene Eingriffswirkung gegen die Unterseite der Öffnung 3 gedrückt. Infolgedessen wird der Blattschaft durch sechs Hauptberührungsstellen, die sich in Paaren an jedem der drei Vorsprünge 17, 18, 19 am Blattschaft 4 befinden, eingeschränkt, und er wird durch den Sperrstift 8 festgehalten. Die Größe der Reaktionskräfte zwischen dem Blattschaft 4 und der Blattöffnung 3 hängt direkt mit der von der Torsionsfeder 12 ausgeübten Federvorspannung und deren Federkonstante zusammen und kann deshalb leicht auf die für die zu verwendende Blattart geeignete Höhe eingestellt werden. Es ist jedoch wichtig, daß die Vorspannung an der Torsionsfeder größer ist als die der Auslöserfeder 14, um zu gewährleisten, daß der Blattschaft fest in die Blattöffnung 3 gedrückt wird.

Zur Freigabe des Blatts dreht der Bediener den Freigabehebel 10 gegen die Kraft der Torsionsfeder 12 um die Achse 11, so daß der Sperrstift 8 aus dem Loch 9 im Blattschaft 4 so weit zurückgezogen wird, daß die durch die Verjüngung am Vorderrand des Sperrstifts 8 ausgeübte Belastung des Vorderrands des Lochs 9 beseitigt wird. Bei Beseitigung der Belastung bewirkt die Spannung in der Auslöserfeder 14, daß sich der Auslöser zu seiner Sperrstellung bewegt, wodurch gleichzeitig der Blattschaft 4 aus der Klemmöffnung 3 ausgestoßen und der Sperrstift 8 erneut in seiner Freigabestellung verriegelt wird, wie oben beschrieben, und zur Aufnahme eines neuen Blatts bereit ist.

Anstelle eines Stifts mit sich verjüngendem Rand kann der Sperrstift 8 ein standardmäßiger Stift sein, der lediglich dahingehend wirkt, ein Zurückziehen des Blattschafts aus der Öffnung 3 zu verhindern, ohne eine Eingriffswirkung auszuüben, um den Blattschaft weiter in die Öffnung zu ziehen. In diesem Fall muß der Bediener stattdessen das Blatt weit genug in die Öffnung einführen, um zu gewährleisten, daß der Stift 8 ordnungsgemäß im Loch 9 positioniert wird, wobei die Position des Lochs dann die Position, in der der Schaft in der Öffnung 3 festgehalten wird, und somit das Ausmaß des mechanischen Spiels des Schafts in der Öffnung 3 bestimmt. Ohne eine Verjüngung am Sperrstift könnte diese Ausführungsform jedoch immer noch übermäßiges mechanisches Spiel aufweisen, was bei Systemen nach dem Stand der Technik üblicherweise der Fall ist. Statt der Ausbildung der drei Vorsprünge 17, 18, 19 an den Rändern des Blattschafts 4 können sie in den sich verjüngenden Wänden der Öffnung ausgebildet werden, obgleich in diesem Fall möglicherweise keine bidirektionale Befestigung des Blatts erreicht werden kann.

Bei einer nicht dargestellten Ausführungsform der Erfindung wird das Loch 9 im Schaft 4 durch eine in eine sich verjüngende Seite 16 des Schafts 4 geschnittene Kerbe ersetzt, die eine schräge, seitlich zugewandte Fläche aufweist, an der der Sperrstift 8 angreifen kann, um die Längsbewegung des Schafts 4 in der Klemmöffnung 3 einzuschränken. Um zu gewährleisten; daß durch den Sperrstift eine torsionsmäßig ausgeglichene Belastung ausgeübt wird, kann solch eine Kerbe des weiteren in jeder sich verjüngenden Seite des Schafts 4 ausgebildet werden, und der Klemmechanismus kann dann mit einem Sperrstiftpaar versehen sein, von dem jeweils ein Sperrstift einer jeweiligen Kerbe zugeordnet ist.

Obgleich die Erfindung oben in Verbindung mit Säbelsägen beschrieben worden ist, versteht sich, daß sie auch mit anderen Sägenarten, wie zum Beispiel Laubsägen, oder sogar anderen Werkzeugarten, die wechsel-/austauschbare Werkzeugteile, wie zum Beispiel Feilen und dergleichen, aufweisen, verwendet werden kann.

## Patentansprüche

1. Werkzeugklemmmechanismus (1) mit einem Gehäuse (2), das eine mehrkantige Klemmöffnung (3) zur Aufnahme des mehrkantigen, Werkzeugschafts (4) eines festzuklemmenden Werkzeugs (5) in Form eines Hubsägeblatts, dessen Seiten (15, 16) sich zu seinem Ende hin verjüngen, aufweist, **dadurch gekennzeichnet, dass** sich die Klemmöffnung (3) einwärts in einer ersten Richtung verjüngt, in der im Gebrauch der sich zu seinem Ende hin verjüngende Werkzeugschaft. (4) in die Klemmöffnung (3) eingeführt wird, und sich auch in einer senkrecht sowohl zu den Seitenflächen des eingeführten Werkzeugschafts (4) als auch zur ersten Richtung verlaufenden zweiten Richtung verjüngt, wobei das Gehäuse (2) eine Öffnung (7) hat, die die Klemmöffnung (3) schneidet, und einen Sperrstift (8), der senkrecht zur ersten Richtung sowie parallel zur zweiten Richtung verläuft und der in der Öffnung (7) zwischen einer ersten Stellung, in der er aus der Klemmöffnung (3) zurückgezogen ist, so dass er im Gebrauch das Einführen und Herausziehen des Werkzeugschafts (4) aus der Klemmöffnung (3) gestattet, und einer zweiten Stellung, in der er in die Klemmöffnung (3) ragt, so dass er im Gebrauch den Werkzeugschaft (4) in Eingriff nimmt, um das Herausziehen des Werkzeugschafts (4) aus der Klemmöffnung (3) zu verhindern, beweglich ist, wobei bei Einführen des Werkzeugschafts (4) in die Klemmöffnung (3) im Gebrauch die Verjüngung der Klemmöffnung (3) in der ersten Richtung eine Bewegung des Werkzeugschafts (4) in einer senkrecht zur ersten und zur zweiten Richtung verlaufenden dritten Richtung einschränkt, die Verjüngung der Klemmöffnung (3) in der zweiten Richtung dem Werkzeugschaft (4) eine Eingriffswirkung verleiht und ihn gegen eine Seite der Klemmöffnung (3) drückt, um eine Bewegung in der zweiten Richtung einzuschränken, und Eingriff des Sperrstifts (8) mit dem Werkzeugschaft (4) eine Bewegung in der ersten Richtung einschränkt, wodurch alle sechs Freiheitsgrade des Werkzeugschafts (4) eingeschränkt werden.

2. Werkzeugklemmmechanismus nach Anspruch 1, bei dem der Sperrstift (8) einen sich verjüngenden Abschnitt aufweist, mit dem er im Gebrauch den an dem in die Klemmöffnung (3) eingeführten Werkzeugschaft (4) ausgebildeten Rand (20) in Eingriff nimmt, wobei bei weiterem Hineindrücken des Sperrstifts (8) in das Werkzeugschaftloch (9) die sich ergebende Eingriffswirkung zwischen dem sich verjüngenden Abschnitt und dem Rand (20) den Schaft (4) tiefer in die Klemmöffnung (3) zieht.

3. Werkzeugklemmmechanismus nach Anspruch 2, bei dem der Kegelwinkel des sich verjüngenden Abschnitts des Sperrstifts (8) kleiner als tan⁻¹(2µ) ist, wobei µ gleich der Haftreibungszahl für die bestimmten Kontaktflächen ist.

4. Werkzeugklemmmechanismus nach einem der vorhergehenden Ansprüche, weiterhin mit einem Vorspannmittel, das den Sperrstift (8) in die zweite Stellung vorspannt.

5. Werkzeugklemmmechanismus nach einem der vorhergehenden Ansprüche, weiterhin mit einem mit dem Sperrstift (8) verbundenen Freigabehebel (10), der dahingehend betätigt werden kann, den Sperrstift (8) zwischen seiner ersten und seiner zweiten Stellung zu bewegen.

6. Werkzeugklemmmechanismus nach Anspruch 5, bei dem der Freigabehebel (10) schwenkbar am Gehäuse (2) angebracht ist.

7. Werkzeugklemmmechanismus nach Anspruch 6, weiterhin mit einer mit dem Freigabehebel (10) verbundenen Torsionsfeder (12), die den Hebel (10) in eine Stellung vorspannt, in der sich der Sperrstift (8) in seiner ersten Stellung befindet.

8. Werkzeugklemmmechanismus nach Anspruch 7, bei dem die Torsionsfeder (12) und der Freigabehebel (10) auf einer gemeinsamen Achse (11) am Gehäuse (2) angebracht sind.

9. Werkzeugklemmmechanismus nach einem der vorhergehenden Ansprüche, weiterhin mit einem verschiebbar an der Klemmöffnung (3) angeordneten Auslöser (13), der durch ein Vorspannmittel (14) in eine Vorwärtsstellung in der Klemmöffnung (3) vorgespannt ist und der im Gebrauch durch das Vorderende des in die Klemmöffnung (3) eingeführten Werkzeugschafts (4) in Eingriff genommen und gegen die Belastung durch das Vorspannmittel (14) nach hinten bewegt wird, wobei die Belastung durch das Vorspannmittel (14) den Schaft (4) aus der Klemmöffnung (3) herausdrängt.

10. Werkzeugklemmmechanismus nach Anspruch 9, bei dem der Auslöser (13) in seiner Vorwärtsstellung über der Schnittstelle zwischen der Öffnung (7) für den Sperrstift (8) und der Klemmöffnung (3) liegt, um den Sperrstift (8) in seiner ersten Stellung zu verriegeln.

11. Werkzeugklemmmechanismus nach Anspruch 10, bei dem der Auslöser (13) in seinem Vorderrand eine V-Kerbe (24) enthält, die mindestens eine im unteren Ende des Sperrstifts (8) ausgebildete Aussparung (23) in Eingriff nimmt, um den Sperrstift (8) in seiner ersten Stellung zu verriegeln.

12. Werkzeugklemmmechanismus nach einem der vorhergehenden Ansprüche, bei dem die Klemmöffnung (3) in der Ebene ihrer Mündung einen trapezförmigen Querschnitt aufweist, dessen Länge in Einführrichtung eines Werkzeugschafts (4) in die Klemmöffnung (3) abnimmt.

13. Werkzeugklemmmechanismus nach einem der vorhergehenden Ansprüche, bei dem der Querschnitt der Klemmöffnung (3) in der Ebene ihrer Mündung symmetrisch ist.

14. Werkzeugklemmmechanismus nach einem der vorhergehenden Ansprüche, bei dem sich die Klemmöffnung (3) in der ersten Richtung symmetrisch verjüngt.

15. Werkzeugklemmmechanismus nach einem der vorhergehenden Ansprüche, bei dem sich die Klemmöffnung (3) in der zweiten Richtung symmetrisch verjüngt.

16. Werkzeugklemmmechanismus nach einem der vorhergehenden Ansprüche, bei dem die Seiten der Klemmöffnung (3) flach sind.

17. Werkzeugklemmmechanismus nach einem der Ansprüche 1 bis 15, bei dem an die sich verjüngenden Seiten der Klemmöffnung (3) drei Vorsprünge angeformt sind, und zwar mindestens einer an jeder sich verjüngenden Seite, wodurch im Gebrauch zwischen dem Werkzeugschaft (4) und den Wänden der Klemmöffnung (3) eine Berührung an sechs Stellen bewirkt wird.

18. Werkzeug in Form eines Hubsägeblatts zur Verwendung mit einem Klemmmechanismus (1) nach einem der vorhergehenden Ansprüche, das einen mehrkantigen, sich zu seinem Ende hin verjüngenden Werkzeugschaft (4), hat, dessen Seiten (15, 16) sich einwärts zum Klemmende hin verjüngen, und eine an dem sich verjüngenden Werkzeugschaft (4) ausgebildete Sperrstifteingriffsfläche (9), insbesondere ein Loch, an der im Gebrauch ein Sperrstift des Klemmmechanismus an- bzw. eingreift, insbesondere der Vorderrand des, insbesondere länglichen, Lochs (9) die Sperrstifteingriffsfläche bildet, **dadurch gekennzeichnet, dass** drei Vorsprünge (17, 18, 19) zwischen den konvergierenden Seiten (15, 16) des Werkzeugschafts (4) verteilt sind, wobei sich die drei Vorsprünge (17, 18, 19) im Gebrauch an den konvergierenden Seiten einer Klemmaussparung (3) des Klemmmechanismus abstützen, wobei an einer ersten Seite (15) ein Vorsprung (17) und an der zweiten Seite zwei Vorsprünge (18, 19) ausgebildet sind, um damit eine Dreipunkt-Abstützung zu bewirken.

## Claims

1. Tool clamping mechanism (1) having a housing (2) which has a polygonal clamping opening (3) for receiving the polygonal tool shank (4) of a tool (5) to be clamped tight, said tool (5) being in the form of a hacksaw blade, the sides (15, 16) of which taper towards its end, **characterized in that** the clamping opening (3) tapers inwards in a first direction in which when in use the tool shank (4), which tapers towards its end, is introduced into the clamping opening (3), and also tapers in a second direction which runs perpendicularly both to the side faces of the introduced tool shank (4) and to the first direction, wherein the housing (2) has an opening (7), which intersects the clamping opening (3), and a blocking pin (8), which runs perpendicularly to the first direction and parallel to the second direction and which can move in the opening (7) between a first position, in which it is retracted out of the clamping opening (3), so that when in use it allows the insertion and extraction of the tool shank (4) into and out of the clamping opening (3), and a second position, in which it projects into the clamping opening (3), so that when in use it engages with the tool shank (4) in order to prevent the extraction of the tool shank (4) out of the clamping opening (3), wherein, when the tool shank (4) is introduced into the clamping opening (3) when in use, the tapering of the clamping opening (3) in the first direction restricts movement of the tool shank (4) in a third direction running perpendicularly to the first and to the second direction, the tapering of the clamping opening (3) in the second direction imparts an engagement effect on the tool shank (4) and pushes it towards one side of the clamping opening (3) in order to restrict movement in the second direction, and engagement of the blocking pin (8) with the tool shank (4) restricts movement in the first direction, as a result of which all six degrees of freedom of the tool shank (4) are restricted.

2. Tool clamping mechanism according to Claim 1, in which the blocking pin (8) has a tapering portion with which it engages when in use with the edge (20) formed on the tool shank (4) introduced into the clamping opening (3), wherein when the blocking pin (8) is pushed further into the tool shank hole (9), the resulting engagement effect between the tapering portion and the edge (20) pulls the shank (4) deeper into the clamping opening (3).

3. Tool clamping mechanism according to Claim 2, in which the taper angle of the tapering portion of the blocking pin (8) is less than tan⁻¹(2µ), wherein µ is equal to the coefficient of static friction for the particular contact surfaces.

4. Tool clamping mechanism according to one of the preceding claims, furthermore having a prestressing means which prestresses the blocking pin (8) into the second position.

5. Tool clamping mechanism according to one of the preceding claims, furthermore having a release lever (10) which is connected to the blocking pin (8) and can be actuated such as to move the blocking pin (8) between its first and its second position.

6. Tool clamping mechanism according to Claim 5, in which the release lever (10) is fitted in a pivotable manner to the housing (2).

7. Tool clamping mechanism according to Claim 6, furthermore having a torsion spring (12) which is connected to the release lever (10) and prestresses the lever (10) into a position in which the blocking pin (8) is located in its first position.

8. Tool clamping mechanism according to Claim 7, in which the torsion spring (12) and the release lever (10) are fitted to the housing (2) on a joint shaft (11).

9. Tool clamping mechanism according to one of the preceding claims, furthermore having a trigger (13) which is arranged in a displaceable manner at the clamping opening (3), is prestressed by a prestressing means (14) in a forward position in the clamping opening (3) and which when in use is engaged by the front end of the tool shank (4) introduced into the clamping opening (3) and is moved to the rear counter to the stressing by the prestressing means (14), wherein the stressing by the prestressing means (14) urges the shank (4) out of the clamping opening (3).

10. Tool clamping mechanism according to Claim 9, in which the trigger (13) is located in its forward position over the interface between the opening (7) for the blocking pin (8) and the clamping opening (3), in order to lock the blocking pin (8) in its first position.

11. Tool clamping mechanism according to Claim 10, in which the trigger (13) contains in its front edge a V notch (24) which engages with at least one cutout (23) at the lower end of the blocking pin (8) in order to lock the blocking pin (8) in its first position.

12. Tool clamping mechanism according to one of the preceding claims, in which the clamping opening (3) has in the plane where it opens out a trapezoidal cross section, the length of which decreases in the direction of insertion of a tool shank (4) into the clamping opening (3).

13. Tool clamping mechanism according to one of the preceding claims, in which the cross section of the clamping opening (3) is symmetrical in the plane where it opens out.

14. Tool clamping mechanism according to one of the preceding claims, in which the clamping opening (3) tapers symmetrically in the first direction.

15. Tool clamping mechanism according to one of the preceding claims, in which the clamping opening (3) tapers symmetrically in the second direction.

16. Tool clamping mechanism according to one of the preceding claims, in which the sides of the clamping opening (3) are flat.

17. Tool clamping mechanism according to one of Claims 1 to 15, in which three projections are formed on the tapering sides of the clamping opening (3), and specifically at least one projection on each tapering side, as a result of which when in use contact is made at six points between the tool shank (4) and the walls of the clamping opening (3).

18. Tool in the form of a hacksaw blade for use with a clamping mechanism (1) according to one of the preceding claims, said tool having a polygonal tool shank (4) which tapers towards its end and the sides (15, 16) of which taper inwards towards the clamping end, and a blocking-pin engagement surface (9), in particular a hole, which is formed on the tapering tool shank (4) and on or with which when in use a blocking pin of the clamping mechanism acts or engages, forms in particular the front edge of the, in particular elongate, hole (9) in the blocking-pin engagement surface, **characterized in that** three projections (17, 18, 19) are distributed between the converging sides (15, 16) of the tool shank (4), wherein the three projections (17, 18, 19) when in use are supported against the converging sides of a clamping cutout (3) in the clamping mechanism, wherein one projection (17) is formed on a first side (15) and two projections (18, 19) are formed on the second side in order to bring about a three-point support.

## Revendications

1. Mécanisme de serrage d'outil (1) comprenant un boîtier (2), qui présente une ouverture de serrage polygonale (3) pour recevoir la tige d'outil polygonale (4) d'un outil (5) à fixer en forme de lame de scie sauteuse, dont les côtés (15, 16) se rétrécissent vers son extrémité, **caractérisé en ce que** l'ouverture de serrage (3) se rétrécit vers l'intérieur dans une première direction dans laquelle, lors de l'utilisation, la tige d'outil (4) se rétrécissant vers son extrémité est introduite dans l'ouverture de serrage (3), et se rétrécit également dans une deuxième direction s'étendant perpendiculairement à la fois aux faces latérales de la tige d'outil (4) introduite et à la première direction, le boîtier (2) ayant une ouverture (7) qui coupe l'ouverture de serrage (3) et une goupille de verrouillage (8) qui s'étend perpendiculairement à la première direction et parallèlement à la deuxième direction et qui peut être déplacée dans l'ouverture (7) entre une première position dans laquelle elle est ressortie de l'ouverture de serrage (3) de sorte qu'elle permette, pendant l'utilisation, l'introduction et le retrait de la tige d'outil (4) hors de l'ouverture de serrage (3), et une deuxième position, dans laquelle elle pénètre dans l'ouverture de serrage (3), de sorte qu'elle vienne en prise pendant l'utilisation avec la tige d'outil (4), afin d'empêcher le retrait de la tige d'outil (4) hors de l'ouverture de serrage (3), lors de l'introduction de la tige d'outil (4) dans l'ouverture de serrage (3), pendant l'utilisation, le rétrécissement de l'ouverture de serrage (3) dans la première direction limitant un mouvement de la tige d'outil (4) dans une troisième direction s'étendant perpendiculairement à la première et à la deuxième direction, le rétrécissement de l'ouverture de serrage (3) dans la deuxième direction conférant à la tige d'outil (4) un effet d'engagement et la pressant contre un côté de l'ouverture de serrage (3), afin de limiter un mouvement dans la deuxième direction, et l'engagement de la goupille de serrage (8) avec la tige d'outil (4) limitant un mouvement dans la première direction, de sorte que tous les six degrés de liberté de la tige d'outil (4) soient limités.

2. Mécanisme de serrage d'outil selon la revendication 1, dans lequel la goupille de verrouillage (8) présente une portion se rétrécissant, avec laquelle elle vient en prise, pendant l'utilisation, avec le bord (20) réalisé sur la tige d'outil (4) introduite dans l'ouverture de serrage (3), et lors d'un enfoncement poursuivi de la goupille de verrouillage (8) dans le trou de la tige d'outil (9), l'effet d'engagement résultant entre la portion se rétrécissant et le bord (20) tirant la tige (4) plus profondément dans l'ouverture de serrage (3).

3. Mécanisme de serrage d'outil selon la revendication 2, dans lequel l'angle de conicité de la portion se rétrécissant de la goupille de verrouillage (8) est inférieur à tan⁻¹(2µ), µ étant égal au coefficient d'adhérence par friction pour les surfaces de contact particulières.

4. Mécanisme de serrage d'outil selon l'une quelconque des revendications précédentes, comprenant en outre un moyen de précontrainte, qui précontraint la goupille de verrouillage (8) dans la deuxième position.

5. Mécanisme de serrage d'outil selon l'une quelconque des revendications précédentes, comprenant en outre un levier de libération (10) connecté à la goupille de verrouillage (8), qui peut être actionné en vue de déplacer la goupille de verrouillage (8) entre sa première et sa deuxième position.

6. Mécanisme de serrage d'outil selon la revendication 5, dans lequel le levier de libération (10) est monté de manière pivotante sur le boîtier (2).

7. Mécanisme de serrage d'outil selon la revendication 6, comprenant en outre un ressort de torsion (12) connecté au levier de libération (10), qui précontraint le levier (10) dans une position dans laquelle la goupille de verrouillage (8) se trouve dans sa première position.

8. Mécanisme de serrage d'outil selon la revendication 7, dans lequel le ressort de torsion (12) et le levier de libération (10) sont montés sur un axe commun (11) sur le boîtier (2).

9. Mécanisme de serrage d'outil selon l'une quelconque des revendications précédentes, comprenant en outre un déclencheur (13) disposé de manière déplaçable sur l'ouverture de serrage (3), lequel est précontraint par un moyen de précontrainte (14) dans une position avancée dans l'ouverture de serrage (3), est engagé pendant l'utilisation par l'extrémité avant de la tige d'outil (4) introduite dans l'ouverture de serrage (3) et est déplacé vers l'arrière à l'encontre de la sollicitation par le moyen de précontrainte (14), la sollicitation par le moyen de précontrainte (14) repoussant la tige (4) hors de l'ouverture de serrage (3).

10. Mécanisme de serrage d'outil selon la revendication 9, dans lequel le déclencheur (13) se situe, dans sa position avancée, au-dessus de l'interface entre l'ouverture (7) pour la goupille de verrouillage (8) et l'ouverture de serrage (3), afin de verrouiller la goupille de verrouillage (8) dans sa première position.

11. Mécanisme de serrage d'outil selon la revendication 10, dans lequel le déclencheur (13) contient dans sa paroi avant une entaille en forme de V (24), qui s'engage avec au moins un évidement (23) réalisé dans l'extrémité inférieure de la goupille de verrouillage (8) afin de verrouiller la goupille de verrouillage (8) dans sa première position.

12. Mécanisme de serrage d'outil selon l'une quelconque des revendications précédentes, dans lequel l'ouverture de serrage (3) présente, dans le plan de son embouchure, une section transversale trapézoïdale, dont la longueur diminue dans la direction d'introduction d'une tige d'outil (4) dans l'ouverture de serrage (3).

13. Mécanisme de serrage d'outil selon l'une quelconque des revendications précédentes, dans lequel la section transversale de l'ouverture de serrage (3) est symétrique dans le plan de son embouchure.

14. Mécanisme de serrage d'outil selon l'une quelconque des revendications précédentes, dans lequel l'ouverture de serrage (3) se rétrécit de manière symétrique dans la première direction.

15. Mécanisme de serrage d'outil selon l'une quelconque des revendications précédentes, dans lequel l'ouverture de serrage (3) se rétrécit de manière symétrique dans la deuxième direction.

16. Mécanisme de serrage d'outil selon l'une quelconque des revendications précédentes, dans lequel les côtés de l'ouverture de serrage (3) sont plats.

17. Mécanisme de serrage d'outil selon l'une quelconque des revendications 1 à 15, dans lequel trois saillies sont façonnées sur les côtés se rétrécissant de l'ouverture de serrage (3), et à savoir au moins une sur chaque côté se rétrécissant, de sorte que pendant l'utilisation, un contact soit obtenu en six points entre la tige d'outil (4) et les parois de l'ouverture de serrage (3).

18. Outil en forme de lame de scie sauteuse, destiné à être utilisé avec un mécanisme de serrage (1) selon l'une quelconque des revendications précédentes, qui présente une tige d'outil (4) polygonale, se rétrécissant vers son extrémité, dont les côtés (15, 16) se rétrécissent vers l'intérieur vers l'extrémité de serrage, et une surface d'engagement de goupille de verrouillage (9) réalisée sur la tige d'outil (4) se rétrécissant, venant en prise dans notamment un trou, au niveau duquel, pendant l'utilisation, une goupille de verrouillage du mécanisme de serrage vient en prise, en particulier le bord avant du trou (9), notamment oblong, formant la surface d'engagement de goupille de verrouillage, **caractérisé en ce que** trois saillies (17, 18, 19) sont réparties entre les côtés convergents (15, 16) de la tige d'outil (4), les trois saillies (17, 18, 19), pendant l'utilisation, s'appuyant sur les côtés convergents d'un évidement de serrage (3) du mécanisme de serrage, une saillie (17) étant réalisée sur un premier côté (15), et deux saillies (18, 19) étant réalisées sur le deuxième côté, afin de réaliser ainsi un appui à trois points.
